# EUROPEAN PATENT APPLICATION

(11) **EP 2 311 919 A1**
(43) Date of publication of application: **20.04.2011**
(21) Application number: 10187110.1
(22) Date of filing: 11.10.2010
(51) Int. Cl.: C09D 11/00, C09B 67/00

(54) **Ink composition and method for producing the same**

(30) Priority: 15.10.2009 JP 2009238382
(71) Applicant: Seiko Epson Corporation, Tokyo 163 (JP)
(72) Inventor: Sao, Akihito, Suwa-shi Nagano 392-8502 (JP); Ikeda, Yasunari, Suwa-shi Nagano 392-8502 (JP)
(74) Representative: Grünecker, Kinkeldey, Stockmair & Schwanhäusser Anwaltssozietät

(57) **Abstract**

An ink composition contains C. I. Acid Blue 290 as a colorant and water. In the ink composition, C. I. Acid Blue 290 is contaminated with a by-product produced during the production of C. I. Acid Blue 290 and is represented by Formula (I) below, the by-product is represented by Formula (II) below, and the content of the by-product is 120 ppm or less: 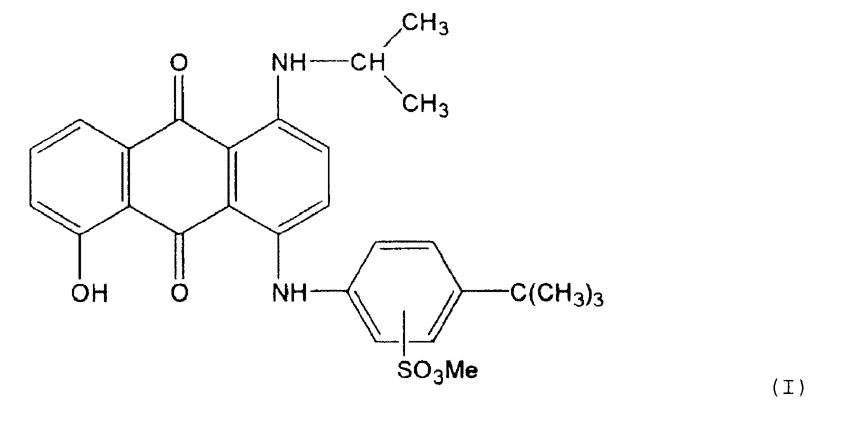 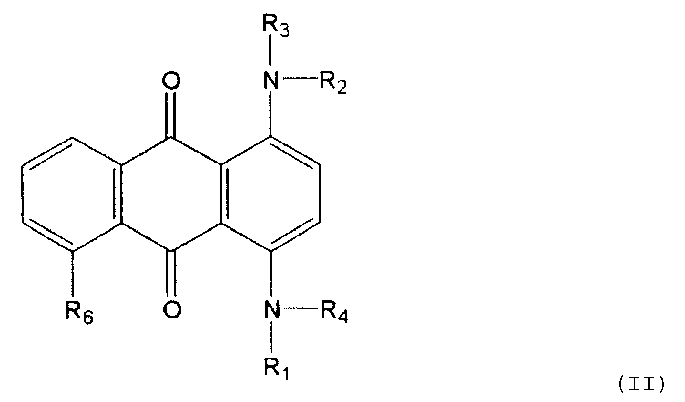 where R₁ to R₄ are independently an alkyl group which contains one or more carbon atoms, which may be branched,
and which may have a phenyl substituent and R₆ is a methyl group, a hydroxyl group, or a proton.

## Description

### BACKGROUND

### 1. Technical Field

The present invention relates to an ink composition for ink jet recording and a method for producing the ink composition.

### 2. Related Art

Screen-printing processes, roller-printing processes, rotary screen-printing processes, transfer printing processes, and similar processes have been conventionally used to print patterns such as images and characters on fabric sheets. These conventional processes require complicated operations for preparing traces and/or printing plates for each pattern and therefore are unsuitable for cost reduction, particularly for high-mix low-volume production. In order to solve these disadvantages, the following process has been developed and put into practical use: an ink jet printing process in which an image sample is read with an image input device such as a scanner, processed with a computer, and then printed on a fabric sheet with an ink jet system in accordance with obtained image information. The ink jet recording process is as follows: ink droplets are ejected from an ink head toward a recording medium such as a sheet of paper or fabric so as to be applied to the recording medium. The ink jet recording process has already been widely used for printing on paper and is being attempted to be used for printing on fabric.

C. I. Acid Blues 258, 280, and 290 have been proposed for inks for ink jet printing, particularly for dyes capable of imparting good light fastness to dyed polyamide fibers. For example, JP-A-7-268783 discloses that a polyamide fiber can be dyed with a dye containing C. I. Acid Blue 290 by a specific dying process so as to have high light fastness.

C. I. Acid Blues 258, 280, and 290 are dyes having extremely low solubility in water. Therefore, the use of these dyes in aqueous inks for ink jet recording causes ejection instability such as clogging and the deterioration of the storage stability of the aqueous inks in some cases. Furthermore, there is a problem in that the use of these dyes in ink jet recording inks is not effective in achieving high color yield. In order to cope with the problem, the inventors have proposed an aqueous ink composition containing an acidic dye such as C. I. Acid Blue 258, 280, or 290 and a polyoxyethylene alkyl ether having a specific structure as disclosed in Japanese Patent Application No. 2009-77170. The aqueous ink composition has good water solubility, stability, and printing properties and is capable of achieving a good color, sharpness, and fastness such as light fastness.

### SUMMARY

The inventors have found that C. I. Acid Blue 290 is unavoidably contaminated with a specific by-product during the production thereof and the by-product acts as a contaminant in an ink containing C. I. Acid Blue 290 as a colorant to negatively affect the ejection stability and storage stability of the ink. Furthermore, the inventors have found that even if an ink composition contains C. I. Acid Blue 290 as a colorant, the reduction of the content of the by-product in the ink composition to a certain value allows the ink composition to have good ejection stability and storage stability. The present invention is based on these findings.

An advantage of some aspects of the invention is to provide an ink composition which has good light fastness, ejection stability, and storage stability and which contains C. I. Acid Blue 290.

An advantage of some aspects of the invention is to provide a method for producing an ink composition which contains C. I. Acid Blue 290, contaminated with a contaminant, as a colorant and in which the content of the by-product is equal to or less than a certain value.

An ink composition according to the present invention contains C. I. Acid Blue 290 as a colorant and water. In the ink composition, C. I. Acid Blue 290 is contaminated with a by-product produced during the production of C. I. Acid Blue 290 and is represented by Formula (I) below, the by-product is represented by Formula (II) below, and the content of the by-product is 120 ppm or less: 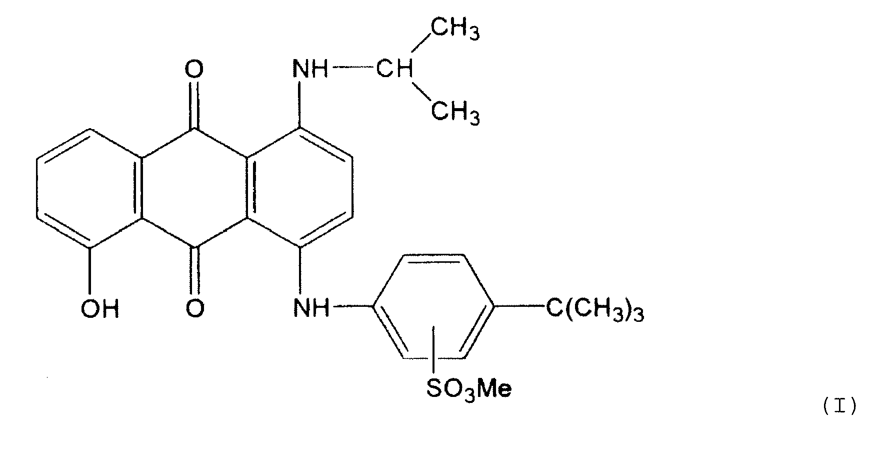 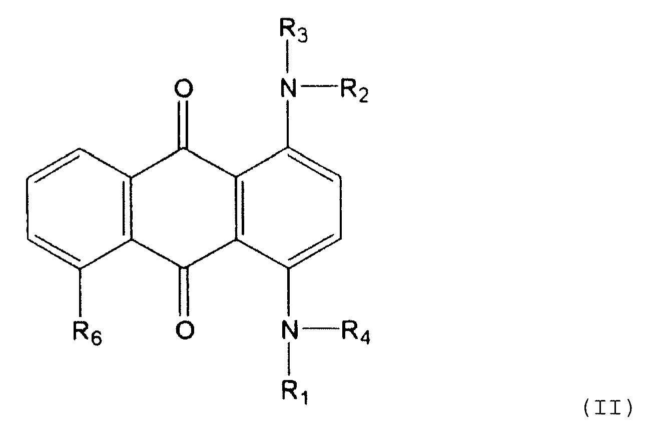 where R₁ to R₄ are independently an alkyl group which contains one or more carbon atoms, which may be branched,
and which may have a phenyl substituent and R₆ is a methyl group, a hydroxyl group, or a proton.

A method for producing the ink composition according to the present invention includes preparing C. I. Acid Blue 290 contaminated with the by-product represented by Formula (II); dissolving C. I. Acid Blue 290 contaminated with the by-product in an organic solvent selected from the group consisting of chloroform, tetrahydrofuran, hexane, acrylonitrile, acetone, and a mixture of two or more of these compounds to prepare a solution; filtering the solution to separate the solution into a filtrate and a residue; removing the organic solvent from the filtrate by reduced-pressure distillation to obtain purified C. I. Acid Blue 290; and mixing purified C. I. Acid Blue 290 with water.

According to the present invention, the following composition can be achieved: an ink composition which has good light fastness, ejection stability, and storage stability and which contains C. I. Acid Blue 290.

### DESCRIPTION OF EXEMPLARY EMBODIMENTS

### Ink composition

An ink composition according to an embodiment of the present invention contains C. I. Acid Blue 290 as a colorant. C. I. Acid Blue 290 is represented by Formula (I) and is contaminated with a by-product which is unavoidably produced during the production of C. I. Acid Blue 290 and which is represented by Formula (II). The content of the by-product in the ink composition is 120 ppm or less. Since the content of the by-product in the ink composition is 120 ppm or less, the ink composition can exhibit both high light stiffness and reliability including ejection stability and storage stability. When the content of the by-product is greater than 120 ppm, the by-product acts as a contaminant insoluble in the ink composition and causes the clogging of recording heads and nozzles of ink jet recording apparatuses and the deterioration of the storage stability of the ink composition. In the ink composition, the content of the by-product is preferably low. The use of a method below allows the content of the by-product to be 120 ppm or less. The content of the by-product is preferably 80 ppm or less, more preferably 50 ppm or less, and most preferably 0 ppm.

Among by-products unavoidably produced during the production of C. I. Acid Blue 290 are compounds which act as contaminants in ink, which have an anthraquinone nucleus, and which are represented by the following formula: 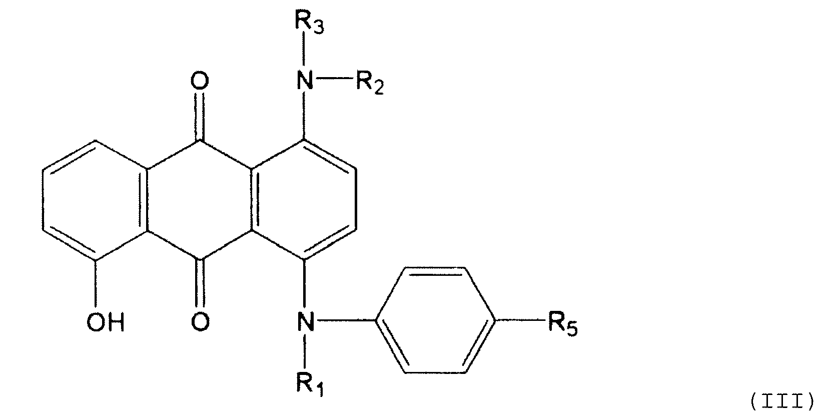 wherein R₁ to R₃ have the same definition as above and R₅ is an alkyl group which may be branched and which contains one or more carbon atoms. In particular, a compound which is represented by the following formula and which has an anthraquinone nucleus acts as a contaminant in ink to cause the clogging of recording heads or nozzles: 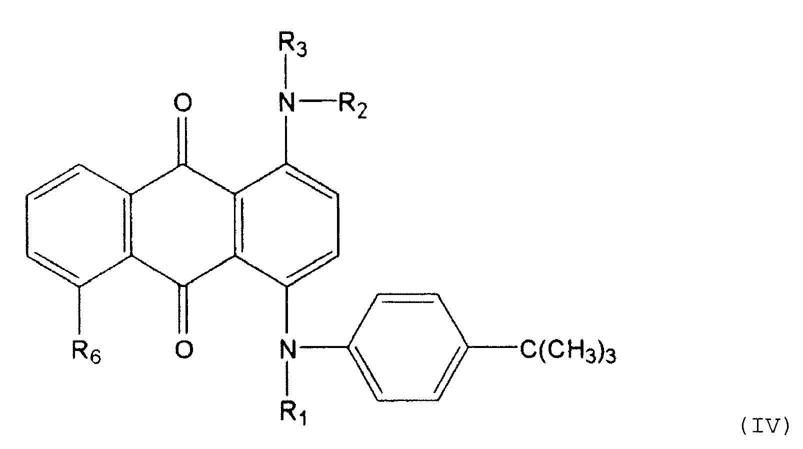 wherein R₁ to R₃ have the same definition as above. These by-products can be substantially completely removed from C. I. Acid Blue 290 by a method below. Therefore, the ink composition can be produced such that the content of the by-product in the ink composition is 120 ppm or less.

In the ink composition, the content of C. I. Acid Blue 290, which is used as a colorant, may be determined such that the ink composition has good water solubility, stability, good printing properties, a good color, sharpness, and stiffness including light stiffness. The content of C. I. Acid Blue 290 is preferably, for example, 10% by weight or less, more preferably 8% by weight or less, even more preferably 6% by weight or less, and most preferably 4% by weight or less.

The ink composition may contain one or more polyoxyethylene alkyl ethers represented by the following formula in addition to C. I. Acid Blue 290 and water: 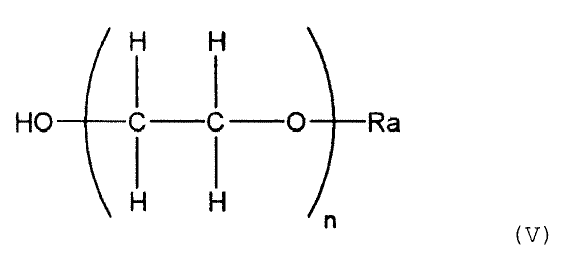 wherein n is an integer of 4 to 100 and Ra is a saturated alkyl group containing eight to 24 carbon atoms. The use of the polyoxyethylene alkyl ethers allows the ink composition to have light stiffness, ejection stability, storage stability, good water solubility, good printing properties, a good color, and sharpness.

The polyoxyethylene alkyl ethers are preferably used in combination. In one of the polyoxyethylene alkyl ethers, Ra in Formula (V) is a saturated alkyl group containing eight to ten carbon atoms and n is an integer of 4 to 20. In another one of the polyoxyethylene alkyl ethers, Ra in Formula (V) is a saturated alkyl group containing 12 to 24 carbon atoms and n is an integer of 10 to 60.

In the ink composition, the total content of the polyoxyethylene alkyl ethers is preferably two times or more greater than that of C. I. Acid Blue 290, more preferably three times or more greater than that of C. I. Acid Blue 290, and most preferably four times or more greater than that of C. I. Acid Blue 290.

In order to stably eject the ink composition from nozzles of recording heads of ink jet printers, the ink composition preferably further contain a humectant. The humectant may be any compound contained in ordinary ink compositions for ink jet printing. Examples of the humectant include polyols such as glycerin, ethylene glycol, diethylene glycol, triethylene glycol, tetraethylene glycol, polyethylene glycol, propylene glycol, dipropylene glycol, polypropylene glycol, 1,3-propanediol, 1,4-butanediol, 1,2-hexanediol, 1,5-pentanediol, 1,6-hexanediol, 1,2,6-hexanetriol, and pentaerythritol; ethers derived from the polyols; esters derived from the polyols; lactams such as 2-pyrrolidone, N-methyl-2-pyrrolidone, and ε-caprolactam; ureas such as urea, thiourea, ethylene urea, and 1,3-dimethylimidazolidinone; and sugars such as maltitol, sorbitol, gluconolactone, and maltose. These compounds may be used alone or in combination. The content of the humectant in the ink composition is preferably 4% to 40% by weight, more preferably of from 8% to 30% by weight, and most preferably of from 10% to 25% by weight.

In order to allow the ink composition to have high wettability and permeability to fabric, the ink composition preferably further contains a water-soluble organic solvent functioning as a penetrant. The water-soluble organic solvent may be any compound used in ordinary ink compositions for ink jet printing as a penetrant. Examples of the water-soluble organic solvent include lower alcohols such as ethanol and propanol; cellosolves such as ethylene glycol monomethyl ether and ethylene glycol monoethyl ether; carbitols such as diethylene glycol monomethyl ether and diethylene glycol monoethyl ether; and glycol ethers such as ethylene glycol mono-n-butyl ether, diethylene glycol n-butyl ether, and triethylene glycol n-butyl ether. These compounds may be used alone or in combination. The content of the water-soluble organic solvent in the ink composition is preferably 2% to 15% by weight, and more preferably of from preferably 4% to 10% by weight.

The ink composition may further contain a surfactant functioning as a penetrant in addition to the polyoxyethylene alkyl ether. The surfactant may be any compound used in ordinary ink compositions for ink jet printing as a penetrant. Examples of the surfactant include fatty acid salts; anionic surfactants such as alkylsulfonates; nonionic surfactants such as polyoxyethylene alkylphenyl ether; acetylene glycol surfactants such as Surfynols^{™} 61, 82, 104, 440, 465, and 485 available from Air Products and Chemicals, Inc.; cationic surfactants; and amphoteric surfactants. These surfactants may be used alone or in combination. The content of the surfactant in the ink composition is preferably 0.2% to 2% by weight.

As described above, the ink composition contains C. I. Acid Blue 290 and may contain the humectant, the water-soluble organic solvent, and the surfactant as required. The ink composition further contains water as a balance. Examples of the water contained in the ink composition include pure water products such as ion-exchanged water, ultrafiltered water, reverse osmosis-purified water, and distilled water and ultrapure waters. These water products are preferably sterilized by ultraviolet irradiation or with aqueous hydrogen peroxide because mold and bacteria can be prevented from growing in these water products over a long time.

The ink composition may further contain one or more additives, such as fungicides, preservatives, oxidation inhibitors, ultraviolet absorbers, chelating agents, oxygen absorbers, pH adjusters (for example, triethanolamine), and dissolution aids, for use in ordinary ink compositions for ink jet printing as required.

In view of the balance between the quality of prints and the reliability of the ink composition, the ink composition preferably has a surface tension of 25 to 40 mN/m and more preferably 28 to 35 mN/m. Furthermore, the ink composition preferably has a viscosity of 1.5 to 10 mPa·s and more preferably 2 to 8 mPa·s at 20°C. The surface tension and viscosity of the ink composition can be adjusted within the above ranges by varying the content of C. I. Acid Blue 290, the type of the humectant, and/or the content of the humectant.

### Method for producing ink composition

The ink composition contains C. I. Acid Blue 290 as described above. The ink composition is produced by a method according to an embodiment of the present invention such that the content of the by-product, which is unavoidably produced during the production of C. I. Acid Blue 290 and is represented by Formula (II), in the ink composition is 120 ppm or less. In particular, the ink composition is produced as described below.

C. I. Acid Blue 290 contaminated with the by-product, which is represented by Formula (II), is prepared. C. I. Acid Blue 290 is an acidic dye represented by Formula (I). C. I. Acid Blue 290 may be synthesized by a known process or may be commercially obtained. C. I. Acid Blue 290 is preferably one commercially available from DyStar Japan Ltd. Since synthesized or commercially available C. I. Acid Blue 290 is contaminated with the by-product, the by-product needs to be removed from C. I. Acid Blue 290 such that the amount of the by-product is below a certain value. The inventors have succeeded in separating the by-product from C. I. Acid Blue 290 using a solvent which is capable of dissolving C. I. Acid Blue 290 and which is incapable of dissolving the by-product. That is, C. I. Acid Blue 290 contaminated with the by-product is dissolved in the solvent and a solution thereby obtained is filtered, whereby the solution is separated into a filtrate and a residue. The filtrate substantially contains only C. I. Acid Blue 290. The by-product is removed in the form of the residue. The solvent is removed from the filtrate by reduced-pressure distillation, whereby C. I. Acid Blue 290 free from the by-product is obtained. The term "C. I. Acid Blue 290 free from the by-product" as used herein means that the content of the by-product in C. I. Acid Blue 290 is 120 ppm or less.

An example of the solvent, which is capable of dissolving C. I. Acid Blue 290 and is incapable of dissolving the by-product, is an organic solvent selected from the group consisting of chloroform, tetrahydrofuran, hexane, acrylonitrile, acetone, and a mixture of two or more of these compounds. The term "solvent capable of dissolving C. I. Acid Blue 290" as used herein means that 5 g or more of C. I. Acid Blue 290 can be dissolved in 100 g of a solvent at room temperature. The term "solvent incapable of dissolving C. I. Acid Blue 290" as used herein means that only less than 0.1 g of C. I. Acid Blue 290 can be dissolved in 100 g of a solvent at room temperature. In the present invention, the solvent is preferably hexane, acrylonitrile, acetone, or a mixture thereof and more preferably hexane, acetone, or a mixture thereof. When the by-product is a compound represented by Formula (IV) in which R₁ is a t-butyl group, R₂ is a methyl group, and R₃ is a methyl group, the solvent is preferably a solvent mixture having a hexane-to-acetone ratio of 20:80.

The filtrate and the residue can be separated from each other by a known filtering process. For example, a filter with a pore size of about 1 µm can be used to separate the filtrate and the residue from each other. In particular, a Fluorinert membrane filter available from Nihon Millipore K.K. is preferably used.

C. I. Acid Blue 290 purified as described above, a colorant, water, and another component are fed to a disperser or mixer such as a ball mill, a sand mill, an attritor, a basket mill, or a roll mill and then mixed therein, whereby the ink composition is prepared. In the present invention, the crude ink composition prepared using the disperser or the mixer is preferably filtered through a filter such as a membrane filter or a mesh filter such that coarse particles are removed.

### Ink jet printing process using ink composition

A record having good water solubility, stability, good printing properties, a good color, sharpness, stiffness including light stiffness can be obtained in such a manner that the ink composition is applied to a piece of fabric, such as woven fabric, knitted fabric, or nonwoven fabric, made of polyamide fibers by an ink jet printing process. The ink composition, as well as ordinary ink compositions for ink jet printing, is used in such a manner that the ink composition is supplied to an ink jet printer. The ink jet printer is not particularly limited and is preferably of a drop-on-demand type. Drop-on-demand type ink jet printers use a piezoelectric element-recording process in which piezoelectric elements mounted in recording heads are used for recording or a thermal jet recording process in which the heat energy generated by a heater, such as a heat-generating resistor, mounted in a recording head is used for recording. Any of these recording processes can be used herein.

In the case of applying the ink composition to the fabric piece by the ink jet printing process, the fabric piece is preferably pretreated with a pretreatment agent. The pretreatment of the fabric piece is as follows: the fabric piece is immersed in the pretreatment agent or after the pretreatment agent is applied to the fabric piece by coating, spraying, or the like, the fabric piece is dried.

The pretreatment agent may be an aqueous solution containing 0.01% to 20% by weight of a sizing agent such as a water-soluble polymer. Examples of the sizing agent include starches such as corn starch and wheat starch; celluloses such as carboxymethylcellulose and hydroxymethylcellulose; polysaccharides such as sodium alginate, gum arabic, locust bean gum, trant gum, guar gum, and tamarind seed gum; proteins such as gelatin and casein; tannin; natural water-soluble polymers such as lignin; and synthetic water-soluble polymers such as polyvinyl alcohols, polyethylene oxides, acrylic compounds, and maleic anhydride compounds. The pretreatment agent may contain a humectant such as urea or thiourea, a pH adjuster, a reduction inhibitor, a penetrant, a sequestering agent, an antifoaming agent, and/or another additive as required.

In the case of applying the ink composition to the fabric piece by the ink jet printing process, after a character and/or an image is printed on the fabric piece by applying the ink composition to the fabric piece, C. I. Acid Blue 290 is fixed. Examples of a process for fixing C. I. Acid Blue 290 include an atmospheric-pressure steaming process, high-pressure steaming process, and thermo-fixing process similar to a dye-fixing process used in a conventional printing method. After C. I. Acid Blue 290 is fixed, the fabric piece is water-washed and then dried in accordance with common practice. The fabric piece may be subjected to soaping (a treatment for washing off unfixed C. I. Acid Blue 290 with a hot soap solution or the like) as required.

### Examples

The present invention is further described below in detail with reference to examples. The present invention is not limited to the examples.

### Preparation of colorant

An acidic dye was measured for solubility in organic solvents shown in Table 1. The acidic dye was C. I. Acid Blue 290. The acidic dye was added to 10 g of each organic solvent and the organic solvent was agitated, whereby the acidic dye was dissolved in the organic solvent. A solution thereby obtained was filtered through an Omnipore membrane filter, having a pore size of 0.2 µm, available from Nihon Millipore K.K. A filter cake thereby obtained was dried and then weighed. A by-product represented by the following formula was measured for solubility in the same manner as that used to measure the acidic dye:

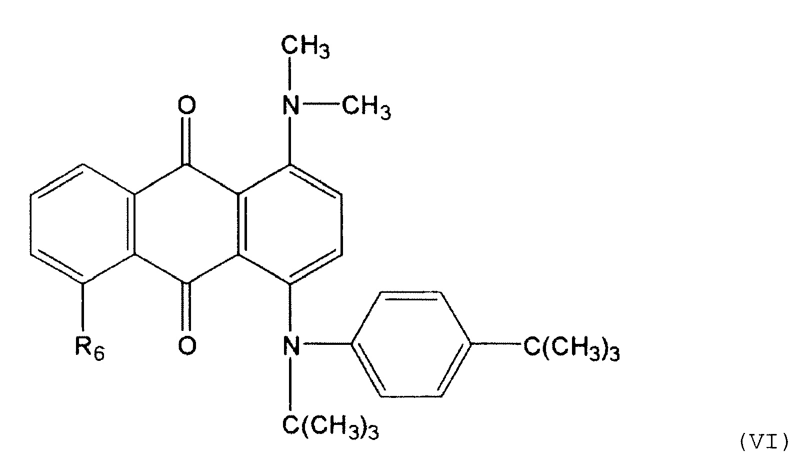

The solubility of the acidic dye and by-product in each organic solvent was evaluated on the basis of the weight of the filter cakes. Evaluation standards were as described below.

| | |
|---|---|
| A rating of 5: | 0 to less than 0.2 g of a filter cake |
| A rating of 4: | 0.2 to less than 0.4 g of a filter cake |
| A rating of 3: | 0.4 to less than 0.6 g of a filter cake |
| A rating of 2: | 0.6 to less than 0.8 g of a filter cake |
| A rating of 1: | 0.8 g or more of a filter cake |

The evaluation results were as shown in Table 1.

**Table 1**

| Solvents | Acidic dye | By-product |
|---|---|---|
| Acetone | 1 | 5 |
| Ethanol | 3 | 1 |
| Methanol | 5 | 1 |
| Chloroform | 4 | 5 |
| Tetrahydrofuran | 4 | 5 |
| Hexane | 2 | 5 |
| Acrylonitrile | 3 | 5 |
| Water | 1 | 1 |

Acetone and hexane were selected on the basis of the above results and then mixed together, whereby a solvent mixture having a hexane-to-acetone ratio of 20:80 was obtained. To 100 ml of the solvent mixture, 5 g of C. I. Acid Blue 290 which was a commercially available acidic dye contaminated with a by-product was added, followed by mixing. A solution thereby obtained was filtered through a Fluorinert membrane filter, having a pore size of 1 µm, available from Nihon Millipore K.K., whereby the solution was separated into a filtrate and a residue. The filtrate was distillated at a reduced pressure, whereby purified C. I. Acid Blue 290 was obtained.

### Preparation of ink compositions

Purified C. I. Acid Blue 290 and unpurified C. I. Acid Blue 290 were each mixed with other components as shown in Table 2. Each obtained mixture was filtered through a membrane filter with a pore size of 10 µm, whereby an ink composition was prepared. Surfactant 1 used to prepare the ink composition was a polyoxyethylene alkyl ether represented by Formula (V) in which Ra is a saturated alkyl group containing eight carbon atoms and n is 4. Surfactant 2 used to prepare the ink composition is a polyoxyethylene alkyl ether represented by Formula (V) in which Ra is a saturated alkyl group containing ten carbon atoms and n is 20.

The ink compositions were each sealed in a glass container and then stored at a temperature of 60°C, 40°C, 25°C, or 0°C. After being left at a temperature of 20°C to 25°C for four hours or more, the ink compositions were agitated and were then each filtered through an Omnipore membrane filter, having a pore size of 1 µm, available from Nihon Millipore K.K. The filter was checked with a microscope whether there was a contaminant on the filter. The contaminant was identified with an infrared microscope, Nicolet Continuum, available from Thermo Scientific. This verified that the contaminant was a by-product represented by Formula (VI). Whether the ink compositions contained the by-product was as shown in Table 2.

**Table 2**

| Components | | Examples | | | | | |
|---|---|---|---|---|---|---|---|
| | | 1 | 2 | 3 | 4 | 5 | 6 |
| Colorants | Acid Blue 290 (unpurified) | 2 | 0.66 | 0.33 | - | - | - |
| | Acid Blue 290 (purified) | - | - | - | 2 | 3 | 4 |
| Surfactant 1 | | 2 | 2 | 2 | 2 | 2 | 2 |
| Surfactant 2 | | 2 | 2 | 2 | 2 | 2 | 2 |
| Butyl triglycol | | 10 | 10 | 10 | 10 | 10 | 10 |
| Glycerin | | 10 | 10 | 10 | 10 | 10 | 10 |
| Olfine E1010 | | 1 | 1 | 1 | 1 | 1 | 1 |
| Water | | 73 | 74 | 75 | 73 | 72 | 71 |
| Sum | | 100 | 100 | 100 | 100 | 100 | 100 |
| Content of by-product (ppm) | | 680 | 230 | 110 | 80 | 120 | 160 |
| Contaminant | | Observed | Observed | Not observed | Not observed | Not observed | Observed |

The by-product was dissolved in water, whereby a 0.001% aqueous solution of the by-product was prepared. The aqueous solution and purified C. I. Acid Blue 290 were mixed with other components as shown in Table 3. Each obtained mixture was filtered through a membrane filter with a pore size of 10 µm, whereby an ink composition was prepared. Surfactants 1 and 2 used were the same as those described above. The ink composition was analyzed for the presence of the by-product and the by-product was identified in the same manner as that described above. Obtained results were as shown in Table 3.

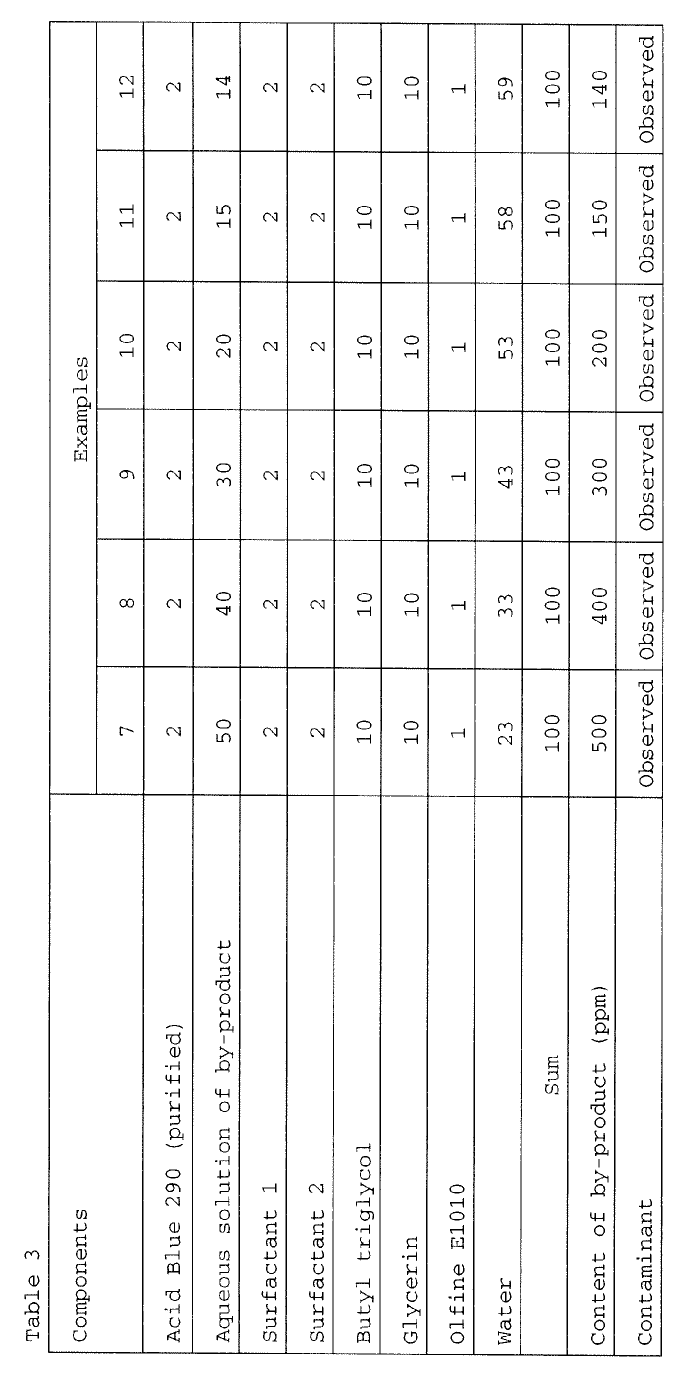

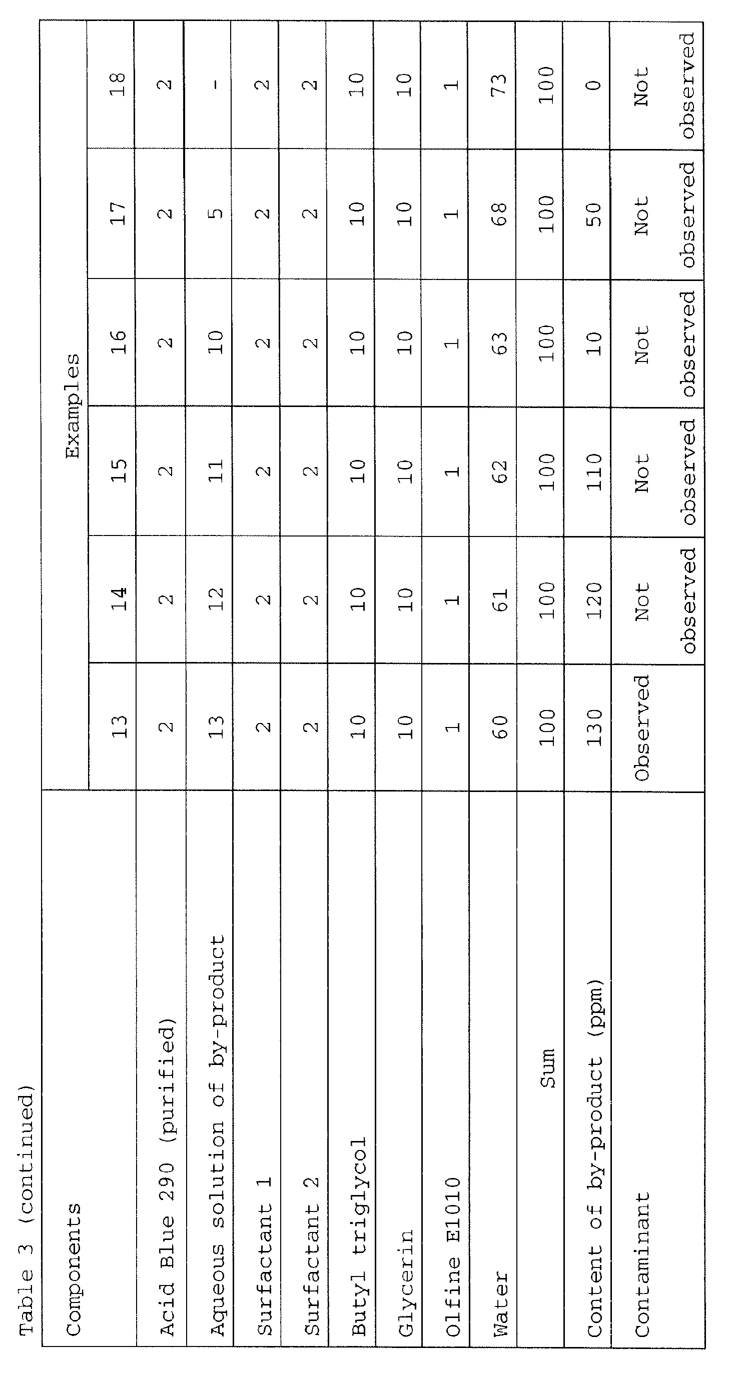

## Claims

1. An ink composition containing:
C. I. Acid Blue 290 as a colorant; and
water,
wherein C. I. Acid Blue 290 is contaminated with a by-product produced during the production of C. I. Acid Blue 290 and is represented by Formula (I) below, the by-product is represented by Formula (II) below, and the content of the by-product is 120 ppm or less: 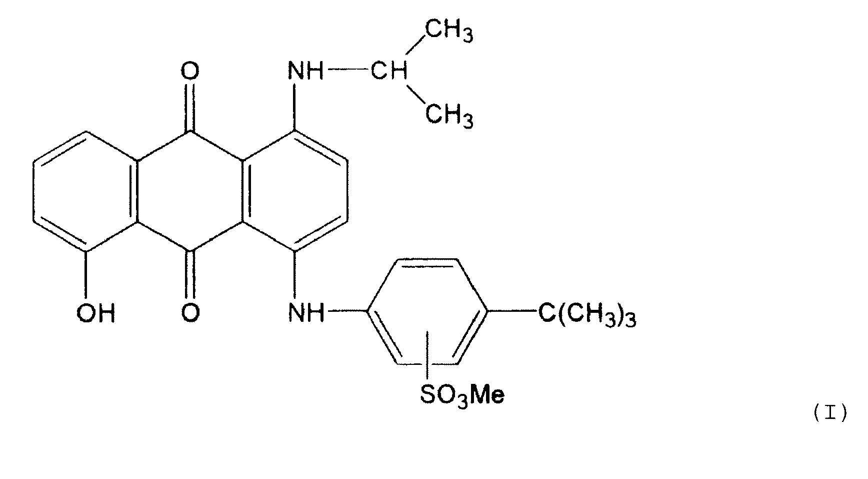 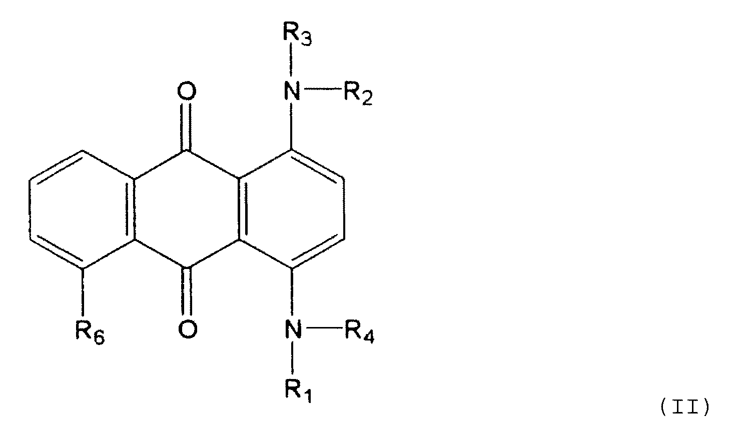 where R₁ to R₄ are independently an alkyl group which contains one or more carbon atoms, which may be branched, and which may have a phenyl substituent and R₆ is a methyl group, a hydroxyl group, or a proton.

2. The ink composition according to Claim 1, wherein the by-product is represented by the following formula: 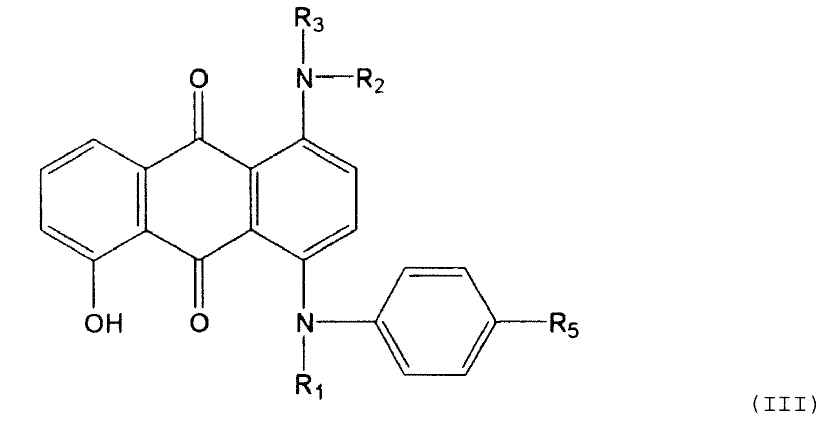 where R₁ to R₃ have the same definition as above and R₅ is an alkyl group which may be branched and which contains one or more carbon atoms.

3. The ink composition according to Claim 1, wherein the by-product is represented by the following formula: 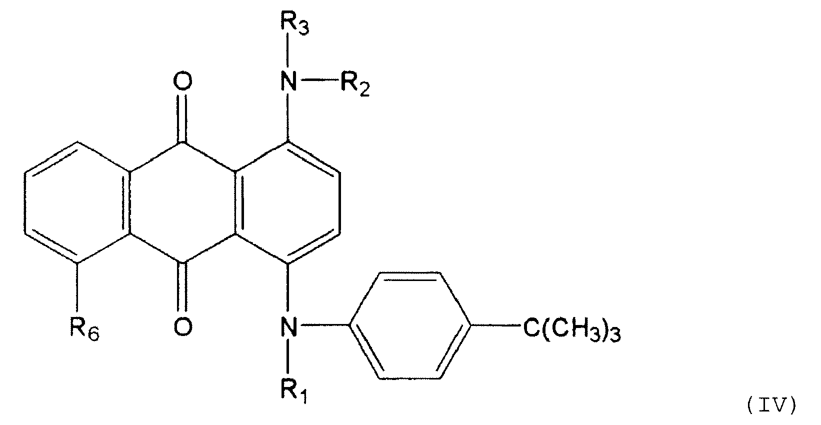 where R₁ to R₃ have the same definition as above.

4. The ink composition according to any one of Claims 1 to 3, further containing one or more polyoxyethylene alkyl ethers represented by the following formula: 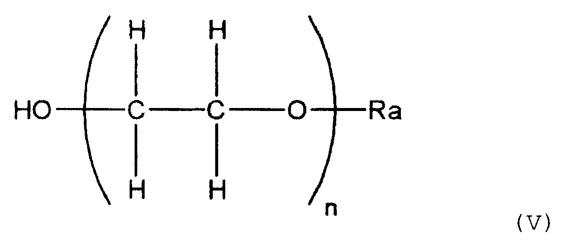 where n is an integer of 4 to 100 and Ra is a saturated alkyl group containing eight to 24 carbon atoms.

5. The ink composition according to any one of Claims 1 to 4 being used for ink jet printing.

6. A method for producing the ink composition according to any one of Claims 1 to 5, comprising:
preparing C. I. Acid Blue 290 contaminated with the by-product represented by Formula (II);
dissolving C. I. Acid Blue 290 contaminated with the by-product in an organic solvent selected from the group consisting of chloroform, tetrahydrofuran, hexane, acrylonitrile, acetone, and a mixture of two or more of these compounds to prepare a solution;
filtering the solution to separate the solution into a filtrate and a residue;
removing the organic solvent from the filtrate by reduced-pressure distillation to obtain purified C. I. Acid Blue 290; and
mixing purified C. I. Acid Blue 290 with water.

7. The method according to Claim 6, wherein the organic solvent is hexane, acrylonitrile, acetone, or a mixture thereof.

8. The method according to Claim 6, wherein the organic solvent is hexane, acetone, or a mixture thereof.
